(19) Europäisches Patentamt
European Patent Office
Office européen des brevets

(11) **EP 4 058 303 B1**

(12) **FASCICULE DE BREVET EUROPEEN**

(45) Date de publication et mention de la délivrance du brevet:
**17.04.2024 Bulletin 2024/16**

(21) Numéro de dépôt: **20861961.9**

(22) Date de dépôt: **12.11.2020**

(51) Classification Internationale des Brevets (IPC):
**B60C 9/20** *(2006.01)*   **B60C 9/28** *(2006.01)*
**B60C 9/22** *(2006.01)*

(52) Classification Coopérative des Brevets (CPC):
**B60C 9/2006;** B60C 9/28; B60C 2009/208;
B60C 2009/209; B60C 2009/2093;
B60C 2009/2096; B60C 2009/2261;
B60C 2009/2276; B60C 2200/065

(86) Numéro de dépôt international:
**PCT/FR2020/052069**

(87) Numéro de publication internationale:
**WO 2021/094688 (20.05.2021 Gazette 2021/20)**

(54) **ARMATURE DE SOMMET DE PNEUMATIQUE POUR VEHICULE LOURD DE GENIE CIVIL**

GÜRTELVERSTÄRKUNG EINES LUFTREIFENS FÜR EIN BAUSTELLENSCHWERLASTFAHRZEUG

CROWN REINFORCEMENT OF A TYRE FOR A HEAVY CONSTRUCTION PLANT VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.11.2019 FR 1912773**

(43) Date de publication de la demande:
**21.09.2022 Bulletin 2022/38**

(73) Titulaire: **COMPAGNIE GENERALE DES ETABLISSEMENTS MICHELIN**
**63000 Clermont-Ferrand (FR)**

(72) Inventeurs:
• **SPINNLER, Olivier**
**63040 CLERMONT-FERRAND Cedex 9 (FR)**
• **DOMINGO, Alain**
**63040 CLERMONT FERRAND Cedex 9 (FR)**
• **D'HARCOURT, Jean Marc**
**63040 CLERMONT FERRAND Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**WO-A1-2014/048897    WO-A1-2017/093637**
**WO-A1-2019/129948**

**Description**

La présente invention a pour objet un pneumatique radial, destiné à équiper un véhicule lourd de génie civil, et concerne plus particulièrement son armature de sommet.

Typiquement un pneumatique radial pour véhicule lourd de génie civil est destiné à être monté sur une jante dont le diamètre est au moins égal à 25 pouces, selon la norme de la « European Tyre and Rim Technical Organisation » ou ETRTO (Organisation technique européenne du pneumatique et de la jante). Bien que non limitée à ce type d'application, l'invention est décrite pour un pneumatique radial de grande dimension, destiné à être monté sur un dumper, véhicule de transport de matériaux extraits de carrières ou de mines de surface, par l'intermédiaire d'une jante dont le diamètre est au moins égal à 49 pouces et peut atteindre 57 pouces, voire 63 pouces.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. La direction circonférentielle est tangente à la circonférence du pneumatique.

Dans ce qui suit, les expressions «radialement intérieur», respectivement «radialement extérieur» signifient «plus proche », respectivement «plus éloigné de l'axe de rotation du pneumatique». Par «axialement intérieur», respectivement «axialement extérieur», on entend «plus proche», respectivement «plus éloigné du plan équatorial du pneumatique», le plan équatorial du pneumatique étant le plan passant par le milieu de la surface de roulement et perpendiculaire à l'axe de rotation.

De façon générale un pneumatique comprend une bande de roulement destinée à venir en contact avec un sol par l'intermédiaire d'une surface de roulement et dont les deux extrémités axiales sont reliées par l'intermédiaire de deux flancs à deux bourrelets assurant la liaison mécanique entre le pneumatique et la jante sur laquelle il est destiné à être monté.

Un pneumatique radial comprend également une armature de renforcement, constituée d'une armature de sommet, radialement intérieure à la bande de roulement, et d'une armature de carcasse, radialement intérieure à l'armature de sommet.

L'armature de carcasse d'un pneumatique radial pour véhicule lourd de génie civil comprend habituellement au moins une couche de carcasse comprenant des renforts généralement métalliques, enrobés dans un matériau à base d'élastomère. Une couche de carcasse comprend une partie principale, reliant les deux bourrelets entre eux et s'enroulant généralement, dans chaque bourrelet, de l'intérieur vers l'extérieur du pneumatique autour d'un élément de renforcement circonférentiel le plus souvent métallique appelé tringle, pour former un retournement. Les renforts métalliques d'une couche de carcasse sont sensiblement parallèles entre eux et forment, avec la direction circonférentielle, un angle compris entre 85° et 95°.

L'armature de sommet d'un pneumatique radial pour véhicule lourd de génie civil comprend une superposition de couches de sommet s'étendant circonférentiellement, radialement à l'extérieur de l'armature de carcasse. Chaque couche de sommet est constituée de renforts généralement métalliques, parallèles entre eux et enrobés dans un matériau à base d'élastomère.

En ce qui concerne les renforts métalliques, un renfort métallique est caractérisé mécaniquement en extension par une courbe représentant la force de traction (en N), appliquée au renfort métallique, en fonction de son allongement relatif (en %), dite courbe force-allongement. De cette courbe force-allongement sont déduites des caractéristiques mécaniques en traction du renfort métallique, telles que l'allongement structural As (en %), l'allongement total à la rupture At (en %), la force à la rupture Fm (charge maximale en N) et la résistance à la rupture Rm (en MPa), ces caractéristiques étant mesurées selon la norme ISO 6892 de 1984.

L'allongement total à la rupture At du renfort métallique est, par définition, la somme de ses allongements respectivement structural, élastique et plastique (At = As + Ae + Ap). L'allongement structural As résulte du positionnement relatif des fils métalliques constitutifs du renfort métallique sous un faible effort de traction. L'allongement élastique Ae résulte de l'élasticité intrinsèque du métal des fils métalliques, constituant le renfort métallique, pris individuellement, le comportement du métal suivant une loi de Hooke. L'allongement plastique Ap résulte de la plasticité, c'est-à-dire de la déformation irréversible, au-delà de la limite élastique, du métal de ces fils métalliques pris individuellement.

On définit également, en tout point de la courbe force-allongement d'un renfort métallique, un module en extension, exprimé en GPa, qui représente la pente de la droite tangente à la courbe force-allongement en ce point. En particulier, on appelle module élastique en extension ou module d'Young, le module en extension de la partie linéaire élastique de la courbe force-allongement.

Parmi les renforts métalliques, on distingue usuellement les renforts métalliques élastiques et les renforts métalliques inextensibles. Un renfort métallique élastique est caractérisé par un allongement structural As au moins égal à 1% et un allongement total à rupture At au moins égal à 4%. En outre, un renfort métallique élastique a un module élastique en extension au plus égal à 150 GPa, et compris usuellement entre 40 GPa et 150 GPa. Un renfort métallique inextensible est caractérisé par un allongement total At, sous une force de traction égale à 10% de la force à rupture Fm, au plus égal à 0.2%. Par ailleurs, un renfort métallique inextensible a un module élastique en extension compris usuellement entre 150 GPa et 200 GPa.

Les caractéristiques mécaniques précédemment décrites sont relatives à un renfort métallique nu, c'est-à-dire non enrobé dans un matériau à base d'élastomère vulcanisé. Ces caractéristiques mécaniques peuvent être significativement différentes lorsque le renfort métallique est enrobé dans un matériau à base d'élastomère vulcanisé. En particulier pour un renfort métallique élastique, généralement constitué par un assemblage de torons de fils métalliques, l'allongement structural As du renfort enrobé est significativement inférieur à celui du renfort nu. En effet, lors de la mise en tension du renfort élastique nu, les torons vont se rapprocher les uns des autres jusqu'à venir en contact entre eux, avant que le renfort ne se rigidifie. En revanche, lors de la mise en tension du renfort enrobé, le rapprochement des renforts est limité par la présence du matériau à base d'élastomère vulcanisé, d'où un allongement structural As inférieur dans ce cas.

Concernant les couches de sommet de l'armature de sommet, on distingue usuellement les couches de protection, constitutives de l'armature de protection et radialement les plus à l'extérieur, et les couches de travail, constitutives de l'armature de travail et radialement comprises entre l'armature de protection et l'armature de carcasse.

L'armature de protection, comprenant au moins une couche de protection, protège essentiellement les couches de travail des agressions mécaniques ou physico-chimiques, susceptibles de se propager à travers la bande de roulement radialement vers l'intérieur du pneumatique.

L'armature de protection comprend souvent deux couches de protection, radialement superposées, formées de renforts métalliques élastiques, parallèles entre eux dans chaque couche et croisés d'une couche à la suivante, en formant, avec la direction circonférentielle, des angles au moins égaux à 10°.

L'armature de travail, comprenant au moins deux couches de travail, a pour fonction de ceinturer le pneumatique et de lui conférer de la rigidité et de la tenue de route. Elle reprend à la fois des sollicitations mécaniques de gonflage, générées par la pression de gonflage du pneumatique et transmises par l'armature de carcasse, et des sollicitations mécaniques de roulage, générées par le roulage du pneumatique sur un sol et transmises par la bande roulement. Elle doit en outre résister à l'oxydation et aux chocs et perforations, grâce à sa conception intrinsèque et à celle de l'armature de protection.

L'armature de travail comprend usuellement deux couches de travail, radialement superposées, formées de renforts métalliques inextensibles, parallèles entre eux dans chaque couche et croisés d'une couche à la suivante, en formant, avec la direction circonférentielle, des angles au plus égaux à 60°, et, de préférence, au moins égaux à 15° et au plus égaux à 45°.

De plus, pour diminuer les sollicitations mécaniques de gonflage transmises à l'armature de travail, il est connu de disposer, radialement à l'extérieur de l'armature de carcasse, une armature de frettage, ayant une rigidité en extension circonférentielle élevée. L'armature de frettage, dont la fonction est de reprendre au moins en partie les sollicitations mécaniques de gonflage, améliore également l'endurance de l'armature de sommet par une rigidification de l'armature de sommet, lorsque le pneumatique est écrasé sous une charge radiale et, en particulier, soumis à un angle de dérive autour de la direction radiale.

L'armature de frettage comprend au moins une couche de frettage et usuellement au moins deux couches de frettage, radialement superposées, formées de renforts métalliques, parallèles entre eux dans chaque couche et croisés d'une couche à la suivante, en formant, avec la direction circonférentielle, des angles au plus égaux à 10°. L'armature de frettage peut être positionnée radialement à l'intérieur de l'armature de travail, entre deux couches de travail de l'armature de travail, ou radialement à l'extérieur de l'armature de travail.

Les couches de frettage peuvent être soit des couches de frettage à angles fermés dont les renforts métalliques forment, avec la direction circonférentielle, des angles au moins égaux à 5° et au plus égaux à 10°, soit des couches de frettage circonférentielles dont les renforts métalliques forment, avec la direction circonférentielle, des angles au plus égaux à 5° et pouvant être nuls. Les couches de frettage à angles fermés comprennent des renforts métalliques ayant des extrémités libres au niveau de leurs extrémités axiales. Les couches de frettage circonférentielles comprennent des renforts métalliques n'ayant pas d'extrémités libres au niveau de leurs extrémités axiales, les couches de frettage circonférentielles étant obtenues le plus souvent par l'enroulement circonférentiel d'une nappe de renforts métalliques, d'une bande élémentaire de renforts métalliques ou d'un renfort métallique unique. Une telle armature de frettage est, par exemple, décrite dans les documents WO 2014048897 A1, WO 2016139348 A1 et WO 2017093637 A1.

Le document WO 2014048897 A1 a pour objectif de désensibiliser le sommet d'un pneumatique radial pour véhicule lourd de génie civil aux chocs survenant essentiellement au centre de sa bande de roulement, et décrit une armature additionnelle centrée sur le plan équatorial du pneumatique, comprenant au moins une couche additionnelle, formée de renforts métalliques faisant avec la direction circonférentielle un angle au plus égal à 10°, les renforts métalliques de chaque couche additionnelle étant élastiques et ayant un module élastique en extension au plus égal à 150 GPa. L'armature additionnelle, décrite dans ce document, est donc une armature de frettage à renforts métalliques élastiques, les couches de frettage pouvant être soit des couches de frettage à angles fermés, soit des couches de frettage circonférentielles.

Le document WO 2016139348 A1 a pour objectif d'améliorer à la fois les performances d'endurance au clivage et de résistance aux chocs du sommet d'un pneumatique pour véhicule lourd de génie civil, et décrit une armature de frettage, formée par un enroulement circonférentiel d'une nappe de façon à former un empilement radial d'au moins deux couches de frettage, comprenant des renforts métalliques élastiques circonférentiels formant, avec la direction circonférentielle des angles au plus égaux à 2.5°, l'armature de frettage étant radialement positionnée entre les couches de travail, et les renforts métalliques circonférentiels de l'armature de frettage ayant une force à rupture au moins égale à 800 daN. L'armature de frettage, décrite dans ce document, est donc une armature de frettage constituée de couches de frettage circonférentielles à renforts métalliques élastiques.

Le document WO 2017093637 A1 concerne un pneumatique pour véhicule lourd de génie civil comprenant des armatures de travail, de protection, de frettage. L'armature de travail comprend deux couches, comprenant des renforts métalliques inélastiques croisés et faisant, avec la direction circonférentielle, des angles compris entre 30° et 35°, et ayant une force à rupture supérieure à 2500 daN. L'armature de frettage est formée par un enroulement circonférentiel formant deux couches, radialement positionnée entre les couches de travail, comprenant des renforts métalliques élastiques circonférentiels, ayant une force à rupture supérieure à 800 daN. Les renforts métalliques des couches de protection sont potentiellement identiques aux renforts de l'armature de frettage, croisés d'une couche à l'autre avec des angles identiques aux couches de travail. Ces renforts sont élastiques, ont un diamètre supérieur à 3 mm et une force à rupture supérieure à 800 daN.

Dans le cas particulier d'une armature de frettage à couches de frettage circonférentielles, lorsque le pneumatique, en roulage, est soumis à un effort axial, parallèle à son axe de rotation, appelé également effort transversal ou latéral, les extrémités axiales des couches de frettage circonférentielles sont soumises à des tensions importantes en raison de la flexion sur chant, autour d'un axe radial, de l'armature de sommet dans son ensemble. En d'autres termes, les renforts métalliques les plus axialement extérieurs des couches de frettage circonférentielles sont alors soumis à des allongements élevés, pouvant entraîner leur rupture et, par conséquent, un endommagement de l'armature de frettage, pouvant entraîner à son tour un endommagement de l'armature de sommet et un retrait prématuré du pneumatique.

Pour diminuer les tensions dans les renforts métalliques positionnés aux extrémités axiales des couches de frettage circonférentielles, il est connu, par exemple, de diminuer les angles formés, avec la direction circonférentielle, par les renforts métalliques des couches de travail, pour augmenter la contribution de l'armature de travail au frettage du pneumatique. Il est également connu de diminuer le module élastique en extension des renforts métalliques des couches de frettage circonférentielles ou d'augmenter leur allongement structural, et donc d'augmenter leur capacité d'allongement. Mais les solutions précédemment décrites présentent l'inconvénient de générer une augmentation des cisaillements aux extrémités axiales des couches de travail, et donc de diminuer l'endurance de l'armature de sommet, ce qui va à l'encontre de l'objectif du frettage qui est, en particulier, de maîtriser lesdits cisaillements et, par conséquent, de garantir une endurance satisfaisante de l'armature de sommet.

Ainsi la recherche d'une résistance à la rupture suffisante de l'armature de frettage peut conduire à une dégradation de l'endurance de l'armature de sommet, en particulier lorsque le pneumatique fonctionne en dérive, sous l'action d'une sollicitation transversale.

Les inventeurs se sont donnés pour objectif, pour un pneumatique radial pour véhicule lourd de génie civil comprenant une armature de frettage à couches de frettage circonférentielles, de trouver un compromis satisfaisant entre la résistance à la rupture de l'armature de frettage et l'endurance de l'armature de travail, lors du roulage du pneumatique, en particulier en dérive.

Cet objectif a été atteint, selon l'invention, par un pneumatique pour véhicule lourd de génie civil, destiné à porter une charge nominale Zn, comprenant une armature de sommet, radialement intérieure à une bande de roulement et radialement extérieure à une armature de carcasse:

- l'armature de sommet comprenant une armature de travail et une armature de frettage circonférentielle,
- l'armature de travail ayant une largeur axiale LT et étant constituée par une première et une deuxième couches de travail constituées chacune de renforts métalliques inextensibles ayant un module élastique en extension supérieur à 150 GPa, enrobés dans un matériau à base d'élastomère, parallèles entre eux, et croisés d'une couche de travail à la suivante, de telle sorte que l'angle moyen AM des renforts métalliques de l'armature de travail, défini comme la moyenne géométrique des angles respectifs formés par les renforts des première et deuxième couches de travail avec une direction circonférentielle, tangente à la circonférence du pneumatique, est au moins égal à 15° et au plus égal à 45°,
- l'armature de frettage circonférentielle ayant une largeur axiale LF au moins égale à 0.3 fois la largeur axiale LT de l'armature de travail, et comprenant au moins une couche de frettage circonférentielle constituée de renforts métalliques élastiques ayant un module élastique en extension au plus égal à 150 GPa, enrobés dans un matériau à base d'élastomère, parallèles entre eux et formant, avec la direction circonférentielle, un angle au plus égal à 5°,

- les renforts métalliques élastiques de l'armature de frettage circonférentielle, extraits du pneumatique avec leur enrobage de matériau à base d'élastomère vulcanisé, ayant un allongement structural As au moins égal à 0.5% et une force à rupture Fr,

**caractérisé en ce que** la largeur axiale LF de l'armature de frettage circonférentielle, l'allongement structural As des renforts métalliques élastiques de l'armature de frettage circonférentielle et la force à rupture Fr des renforts métalliques élastiques de l'armature de frettage circonférentielle, et l'angle moyen AM des renforts métalliques inextensibles de l'armature de travail vérifient la relation :

$$Zn/Z0 * (T0 + (a1+a2*As)/AM + b*LF*(AM-A0)/A0 + c*AM ) < Fr/CS$$

avec

Zn : charge nominale ( exprimée en tonnes) appliquée sur le pneumatique,
Z0 : charge de référence égale à 100 tonnes,
T0 : tension de référence égale à 7000 N,
a1 = -230000 N*°,
a2 = -160000 N*°/%,
b = -34000 N/m,
A0 : angle moyen de référence des renforts métalliques de l'armature de travail égal à 29°,
c = 550 N/°,
CS : coefficient de sécurité au moins égal à 1.

L'invention consiste essentiellement en une optimisation d'une armature de frettage à renforts métalliques élastiques en combinaison avec une armature de travail à renforts métalliques inextensibles. Les paramètres de conception de l'armature de frettage pris en compte sont d'une part sa largeur axiale, qui définit la zone de frettage du sommet, et, d'autre part, les caractéristiques respectivement d'allongement des renforts métalliques élastiques, conditionnant la déformabilité de l'armature de frettage, et de leur force à rupture, définissant sa résistance à rupture. Le paramètre de conception pris en compte pour l'armature de travail est l'angle moyen des renforts métalliques inextensibles, défini comme la moyenne géométrique des angles formés, avec la direction circonférentielle du pneumatique, par les renforts respectifs des première et deuxième couches de travail. Cet angle moyen caractérise la fonction de triangulation de l'armature de travail : plus cet angle moyen est élevé, moins l'armature de travail contribue à la rigidification circonférentielle du pneumatique et à la reprise des efforts circonférentiels.

La relation vérifiée par les caractéristiques respectives de l'armature de frettage et de l'armature de travail précédemment décrites, selon l'invention, peut être interprétée comme une estimation de la tension maximale du renfort de l'armature de frettage le plus tendu, lorsque l'armature de frettage est soumise à une flexion sur chant autour d'un axe radial, le pneumatique étant soumis à un effort transversal FY en roulage, selon la direction axiale du pneumatique, égal à 0.7 fois la charge Zn nominale telle que recommandée, par exemple, par la norme européenne de l'ETRTO ou de la norme américaine de la « Tire and Rim Administration » ou TRA (Administration du Pneumatique et de la Jante). Cette tension maximale de renfort de frettage doit rester inférieure à la force à rupture Fr du renfort divisée par un coefficient de sécurité CS.

Pour une accélération transversale donnée, l'effort transversal, et donc la tension maximale au sein de l'armature de frettage, sont directement proportionnels à la masse transportée. Dans un souci d'optimisation de la productivité, un exploitant minier va le plus souvent charger ses camions jusqu'à atteindre la charge nominale des pneumatiques. Ainsi, le terme Zn/Z0 signifie que la tension maximale de l'armature de frettage dans un usage moyen est proportionnelle à la charge nominale du pneumatique.

Le terme (a1+a2*As)/AM, avec a1 et a2 négatifs, signifie que, pour un angle moyen AM donné, la tension maximale de renfort de frettage diminue linéairement avec l'allongement structural As, mesuré sur un renfort extrait du pneumatique donc enrobé dans un matériau à base d'élastomère vulcanisé.

Le terme b*LF*(AM-A0)/A0, avec b négatif, montre que l'effet de la largeur frettage sur la tension maximale dépend de la valeur de l'angle moyen AM par rapport à une valeur d'angle moyen de référence A0 égale à 29°. Pour un angle moyen AM supérieur à l'angle moyen de référence A0, une augmentation de la largeur de frettage entraîne une diminution de la tension maximale. A contrario, pour un angle moyen AM inférieur à l'angle moyen de référence A0, une augmentation de la largeur de frettage entraîne une augmentation de la tension maximale.

Le terme c*AM, avec c positif, signifie que la tension maximale de renfort de frettage augmente avec l'angle moyen AM. Mais la contribution de l'angle AM est en fait plus complexe car elle dépend des paramètres d'allongement structural As et de largeur de frettage LF. Selon les valeurs respectives de As et de LF, la tension maximale de renfort de frettage croit avec l'angle AM de façon monotone ou en présentant un maximum.

Le deuxième membre de l'inégalité revendiquée par l'invention est le rapport Fr/CS entre la force à rupture Fr d'un renfort métallique élastique de l'armature de frettage et un coefficient de sécurité CS au moins égal à 1. En pratique, le coefficient de sécurité CS est pris égal à 1 lorsque le roulage du pneumatique s'effectue sur une route ou une piste bien entretenue. En revanche, le coefficient de sécurité CS est pris strictement supérieur à 1, par exemple égal à 1.2, lorsque le roulage du pneumatique s'effectue sur une route ou une piste comprenant des virages et/ou des obstacles, tels que des pierres sur le sol.

Préférentiellement les renforts métalliques élastiques de toute couche de frettage circonférentielle forment, avec la direction circonférentielle, un angle égal à 0°. Une telle couche de frettage circonférentielle peut être réalisée par l'enroulement d'une nappe de renforts à 0°, tel que décrit dans le document WO 2016139348. Ce mode de réalisation industriel est avantageux économiquement, car la durée du cycle de pose d'une telle nappe est plus courte que dans le cas d'un enroulement hélicoïdal d'une bandelette de renforts.

Les renforts métalliques élastiques de toute couche de frettage circonférentielle ont généralement un module élastique en extension au moins égal à 40 GPa, de préférence au moins égal à 75 GPa. Le rôle du frettage étant de reprendre au moins partiellement la tension circonférentielle reprise par les couches de travail et de limiter le risque de clivage, c'est-à-dire de fissuration aux extrémités des couches de travail, un niveau minimum de rigidité des renforts métalliques élastiques est requis pour assurer cette fonction efficacement.

Selon un mode de réalisation préféré, les renforts métalliques élastiques de toute couche de frettage circonférentielle sont des câbles multitorons de structure 1×N comprenant une unique couche de N torons enroulés en hélice, chaque toron comprenant une couche interne de M fils internes enroulés en hélice et une couche externe de K fils externes enroulés en hélice autour de la couche interne. Les formules de câbles à multitorons sont des assemblages classiques pour des câbles élastiques.

Selon une variante préférentielle du mode de réalisation préféré des renforts élastiques, l'unique couche de N torons, enroulés en hélice, comprend N=3 ou N=4 torons, de préférence N=4 torons.

Plus particulièrement la couche interne de M fils internes, enroulés en hélice, de chaque toron comprend M=3, 4 ou 5 fils internes, de préférence M=3 fils internes.

Encore plus particulièrement la couche externe de K fils externes, enroulés en hélice autour de la couche interne de chaque toron, comprend K=7, 8, 9, 10 ou 11 fils externes, de préférence K=8 fils externes.

Avantageusement l'armature de frettage circonférentielle a une largeur axiale LF au plus égale à 0.9 fois la largeur axiale LT de l'armature de travail. Il est en effet important de conserver les extrémités axiales des couches de frettage axialement à l'intérieur de celles des couches de travail. En effet, les extrémités axiales des couches de travail sont des zones propices à l'initiation de fissures. Or une fissuration au niveau de l'armature de frettage peut entraîner sa rupture, par usure par frottement des renforts métalliques, ce qui annulerait l'effet bénéfique du frettage.

Préférentiellement la force à rupture Fr de tout renfort métallique élastique de l'armature de frettage circonférentielle est au moins égale à 8000 N. C'est un minimum requis compte tenu des sollicitations appliquées sur un pneumatique destiné à équiper un véhicule lourd de génie civil.

Selon un mode de réalisation préféré l'armature de frettage circonférentielle est radialement positionnée entre la première couche de travail et la deuxième couche de travail. En d'autres termes elle est prise en sandwich entre deux couches de travail. Afin de protéger l'armature de frettage des agressions extérieures, on a intérêt à la positionner radialement entre les couches de travail qui constituent alors une barrière supplémentaire contre les agressions. Par ailleurs, positionner les couches de frettage radialement à l'intérieur de l'armature de travail entraine une surtension dans leurs renforts, lors du passage sur un obstacle, résultant de la contre courbure induite sur le sommet et de l'angulation circonférentielle des renforts des couches de frettage. Par conséquent, positionner l'armature de frettage radialement entre les couches de travail constitue un bon compromis entre les risques respectifs d'agressions et de surtension de l'armature de frettage.

Selon une variante du mode de réalisation préféré précédent les deux couches de travail de l'armature de travail entrent en contact l'une avec l'autre, au niveau de leurs extrémités axiales respectives, pour former une zone de couplage axialement intérieure à une zone de découplage au niveau de laquelle les extrémités axiales sont espacées l'une de l'autre.

Dans le cas particulier où l'armature de frettage est positionnée entre les deux couches de travail, les deux couches de travail sont par conséquent éloignées l'une de l'autre d'une distance radiale égale à l'épaisseur radiale de l'armature de frettage. Par zone de couplage, on entend une zone dans laquelle les deux couches de travail reviennent en contact l'une avec l'autre, au-delà de la zone de frettage, axialement à l'extérieur de l'armature de frettage. La zone de couplage permet ainsi de rigidifier localement l'armature de travail. Par zone de découplage, on entend une zone dans laquelle les deux couches de travail vont à nouveau s'éloigner l'une de l'autre, axialement à l'extérieur de la zone de couplage. La zone de découplage permet de diminuer les cisaillements aux extrémités axiales des couches de travail et donc de limiter le risque de fissuration dans cette zone.

Le plus souvent l'armature de frettage circonférentielle est constituée par deux couches de frettage circonférentielles. Deux couches de frettage circonférentielles sont généralement nécessaires pour obtenir le niveau de rigidité circonférentielle, et donc de frettage, souhaité.

Préférentiellement l'armature de sommet comprend, radialement le plus à l'extérieur, une armature de protection comprenant au moins une couche de protection constituée de renforts métalliques élastiques ayant un module élastique en extension au plus égal à 150 GPa, enrobés dans un matériau à base d'élastomère, parallèles entre eux et formant, avec la direction circonférentielle tangente à la circonférence du pneumatique, un angle au moins égal à 10°.

L'armature de protection est le plus souvent constituée par deux couches de protection, dont les renforts métalliques élastiques forment, avec la direction circonférentielle, un angle au moins égal à 15°.

Selon un mode de réalisation particulier la couche de protection la plus radialement intérieure est axialement la plus large de toutes les couches de l'armature de sommet. Cette couche de protection est alors qualifiée de débordante car ses extrémités axiales débordent celles des autres couches de sommet, ce qui garantit une bonne protection de ces dernières. Dans cette configuration il n'y a pas d'interactions mécaniques entre les couches de protection et les couches de frettage.

Les caractéristiques de l'invention sont illustrées par les figures 1 à 5 schématiques et non représentées à l'échelle:

- Figure 1 : Demi-coupe méridienne d'un sommet de pneumatique pour véhicule lourd de type génie civil selon l'invention.
- Figure 2a : Vue développée schématique d'une couche de frettage circonférentielle au repos.
- Figure 2b : Vue développée schématique d'une couche de frettage circonférentielle en flexion sur chant.
- Figure 3: Evolution de la tension maximale de renfort de frettage Tmax en fonction de l'allongement structural As des renforts métalliques élastiques de l'armature de frettage.
- Figure 4: Evolution de la tension maximale de renfort de frettage Tmax en fonction de la largeur axiale LF de l'armature de frettage.
- Figure 5: Evolution de la tension maximale de renfort de frettage Tmax en fonction de l'angle moyen AM des renforts métalliques inextensibles de l'armature de travail.

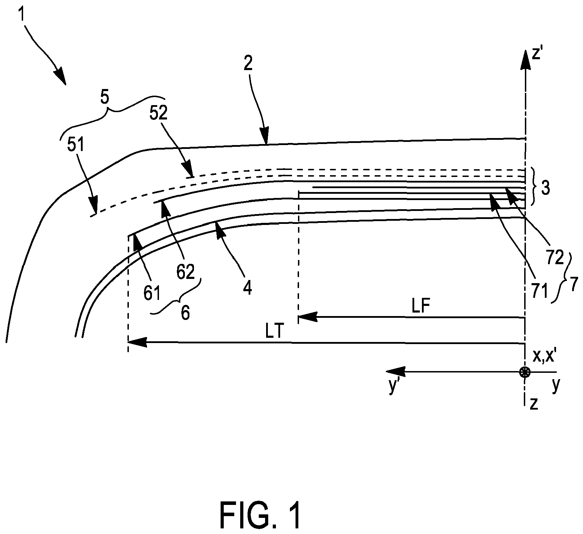

Sur la figure 1, est représentée une demi-coupe méridienne, dans un plan YZ, d'un pneumatique 1 pour véhicule lourd de génie civil selon l'invention, comprenant une armature de sommet 3, radialement intérieure à une bande de roulement 2 et radialement extérieure à une armature de carcasse 4. L'armature de sommet 3 comprend, radialement de l'extérieur vers l'intérieur, une armature de protection 5 et une armature de travail 6. L'armature de protection 5 comprend deux couches de protection (51, 52) constituées chacune de renforts métalliques élastiques ayant un module élastique en extension au plus égal à 150 GPa, enrobés dans un matériau à base d'élastomère, parallèles entre eux et formant, avec une direction circonférentielle XX' tangente à la circonférence du pneumatique, un angle au moins égal à 10° (non représenté) et croisés d'une couche de protection à la suivante. L'armature de travail 6 comprend deux couches de travail (61, 62) constituées chacune de renforts métalliques inextensibles ayant un module élastique en extension supérieur à 150 GPa, enrobés dans un matériau à base d'élastomère, parallèles entre eux, et croisés d'une couche de travail à la suivante, de telle sorte que l'angle moyen AM des renforts métalliques de l'armature de travail (6), défini comme la moyenne géométrique des angles respectifs formés par les renforts des première et deuxième couches de travail (61, 62) avec la direction circonférentielle (XX') est au moins égal à 15° et au plus égal à 45°. L'armature de travail 6 a une largeur axiale LT, définie comme la largeur de la couche de travail la plus large, qui est, dans l'exemple représenté, la couche de travail la plus radialement intérieure 61. L'armature de sommet 3 comprend en outre une armature de frettage circonférentielle 7, positionnée radialement entre les deux couches de travail (61, 62) de l'armature de travail 6. L'armature de frettage circonférentielle 7 a une largeur axiale LF, définie comme la largeur de la couche de frettage la plus large, au moins égale à 0.3 fois la largeur axiale LT et comprend deux couches de frettage circonférentielles (71, 72), constituées de renforts métalliques élastiques ayant un module élastique en extension au plus égal à 150 GPa, enrobés dans un matériau à base d'élastomère, parallèles entre eux et formant, avec la direction circonférentielle XX', un angle au plus égal à 5°. Les renforts métalliques élastiques de l'armature de frettage circonférentielle 7, extraits du pneumatique avec leur enrobage de matériau à base d'élastomère vulcanisé, ont un allongement structural As au moins égal à 0.5% et une force à rupture Fr au moins égale à 9000 N. Compte tenu de la représentation de l'invention sur une demi-coupe méridienne, symétrisable par rapport au plan XZ, seules les moitiés respectives des largeurs LF et LT sont représentées.

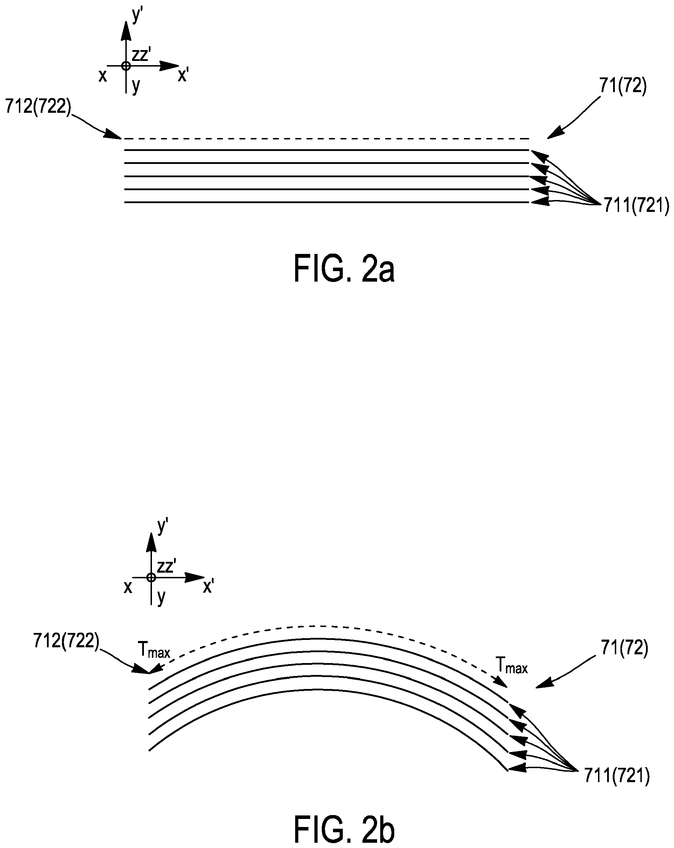

La figure 2a représente une vue développée schématique d'une couche de frettage circonférentielle (71, 72) au repos. Le renfort métallique élastique (712, 722), destiné à être le plus tendu lorsque le pneumatique est soumis à un effort transversal FY en roulage, selon la direction axiale du pneumatique, égal à 0.7 fois la charge Zn nominale, est représenté en traits pointillés, alors que les autres renforts métalliques élastiques (711, 721) sont représentés en traits pleins. Au repos, tous ces renforts métalliques élastiques, parallèles entre eux, sont positionnés dans des plans circonférentiels XZ.

La figure 2b représente une vue développée schématique d'une couche de frettage circonférentielle (71, 72) déformée en flexion sur chant, lorsque le pneumatique est soumis à un effort transversal FY, selon la direction axiale du pneumatique, égal à 0.7 fois la charge Zn nominale. Le renfort métallique élastique (712, 722), positionné sur la fibre extérieure de la poutre en extension constituée par l'armature de sommet, est le plus tendu, alors que les autres renforts métalliques élastiques (711, 721) sont soumis à de plus faibles tensions.

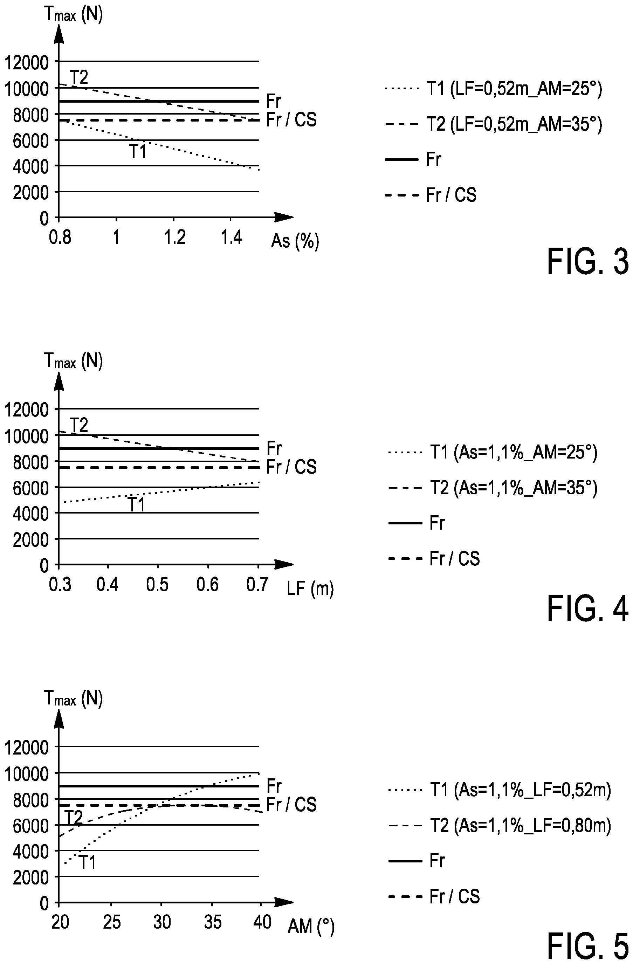

La figure 3 représente l'évolution de la tension maximale de renfort de frettage Tmax en fonction de l'allongement structural As des renforts métalliques élastiques de l'armature de frettage. La tension maximale de renfort de frettage Tmax est la tension du renfort métallique élastique de l'armature de frettage le plus tendu, lorsque le pneumatique est soumis à un effort transversal FY, selon sa direction axiale, égal à 0.7 fois la charge Zn nominale, entraînant une déformation en flexion sur chant de l'armature de frettage. Sur la figure 3 sont représentées une première limite maximale, en trait plein, correspondant, à la force à rupture Fr d'un renfort, et une deuxième limite admissible, en trait discontinu, correspondant à la force à rupture Fr d'un renfort divisée par un coefficient de sécurité CS égal à 1,2. Les droites T1, en trait pointillé, et T2, en trait discontinu, présentent l'évolution de Tmax en fonction de As, pour un angle moyen AM respectivement égal à 25° et à 35° et pour une largeur axiale LF de l'armature de frettage égale à 0.52 m. Dans les deux cas, Tmax diminue quand As augmente, avec une plus faible diminution quand AM est plus élevé. La droite T1 est intégralement dans le domaine admissible, car Tmax reste inférieure à la limite admissible Fr/CS. En revanche, la droite T2 est intégralement hors du domaine admissible, car Tmax reste supérieure à la limite admissible Fr/CS, mais avec toutefois une portion passant en dessous de la limite maximale Fr.

La figure 4 représente l'évolution de la tension maximale de renfort de frettage Tmax en fonction de la largeur axiale LF de l'armature de frettage. Sur la figure 4 sont représentées une première limite maximale, en trait plein, correspondant, à la force à rupture Fr d'un renfort, et une deuxième limite admissible, en trait discontinu, correspondant à la force à rupture Fr d'un renfort divisée par un coefficient de sécurité CS égal à 1,2. Les droites T1 et T2 présentent l'évolution de Tmax en fonction de LF, pour un angle moyen AM respectivement égal à 25° et à 35° et un allongement structural As égal à 1.1%. Dans le cas de la droite T1, en trait pointillé, Tmax augmente quand la largeur axiale LF de l'armature de frettage augmente, car l'angle moyen AM égal à 25° est inférieur à l'angle moyen de référence A0 égal à 29°. La droite T1 est intégralement dans le domaine admissible, car Tmax reste inférieure à la limite admissible Fr/CS. Dans le cas de la droite T2, en trait discontinu, Tmax diminue quand la largeur axiale LF de l'armature de frettage augmente, car l'angle moyen AM égal à 35° est supérieur à l'angle moyen de référence A0 égal à 29°. En revanche, la droite T2 est intégralement hors du domaine admissible, car Tmax reste supérieure à la limite admissible Fr/CS, avec toutefois une portion passant en dessous de la limite maximale Fr.

La figure 5 représente l'évolution de la tension maximale de renfort de frettage Tmax en fonction de l'angle moyen AM des renforts métalliques de l'armature de travail. Sur la figure 5 sont représentées une première limite maximale, en trait plein, correspondant, à la force à rupture Fr d'un renfort, et une deuxième limite admissible, en trait discontinu, correspondant à la force à rupture Fr d'un renfort divisée par un coefficient de sécurité CS égal à 1,2. Les courbes T1 et T2 présentent l'évolution de Tmax en fonction de AM, pour une largeur axial LF de l'armature de frettage respectivement égale à 0.52 m et à 0.80 m et un allongement structural As égal à 1.1%. Dans le cas de la courbe T1, en trait pointillé, Tmax augmente continûment en dépassant la limite admissible puis la limite maximale. Dans le cas de la courbe T2, en trait discontinu, Tmax augmente, passe par un maximum puis diminue, tout en restant en-dessous de la limite admissible. Cette courbe T2 permet de définir un angle moyen AM optimal, pour une largeur axiale LF donnée et un allongement structural As donné, permettant de garantir la résistance à la rupture de l'armature de frettage et une endurance optimale de l'armature de travail vis-à-vis du clivage.

Les inventeurs ont étudié l'invention dans deux dimensions de pneumatique pour véhicule de génie civil, respectivement 40.00R57 et 53/80R63, pour lesquelles les caractéristiques vérifiant le critère de l'invention figurent dans le tableau 1 ci-dessous :

**[Tableau 1]**

| Dimension | 40.00R57 | 53/80R63 |
|---|---|---|
| Charge nominale Zn appliquée au pneumatique (norme de référence) | 60000kg (ETRTO) | 82500kg (TRA) |
| Largeur axiale LF de l'armature de frettage circonférentielle | 0.35m | 0.52m |
| Force à rupture Fr des renforts métalliques élastiques de l'armature de frettage circonférentielle | 9000N | 9000N |
| Allongement structural AS des renforts métalliques élastiques de l'armature de frettage circonférentielle | 0.7% | 1.1% |
| Angle moyen AM des renforts métalliques inextensibles de l'armature de travail | 33° | 29° |

(suite)

| Dimension | 40.00R57 | 53/80R63 |
|---|---|---|
| Tension maximale de frettage Tmax (dans le renfort le plus tendu) | 7887N | 7384N |

Les inventeurs ont pu vérifier expérimentalement, sur les deux exemples ci-dessus, un compromis satisfaisant entre la résistance à la rupture de l'armature de frettage et l'endurance de l'armature de travail, lors du roulage du pneumatique, en particulier en dérive.

**Revendications**

1. Pneumatique (1) pour véhicule lourd de génie civil, destiné à porter une charge nominale Zn, comprenant une armature de sommet (3), radialement intérieure à une bande de roulement (2) et radialement extérieure à une armature de carcasse (4) :

   - l'armature de sommet (3) comprenant une armature de travail (6) et une armature de frettage circonférentielle (7),
   - l'armature de travail (6) ayant une largeur axiale LT et étant constituée par une première et une deuxième couches de travail (61, 62) constituées chacune de renforts métalliques inextensibles ayant un module élastique en extension supérieur à 150 GPa, enrobés dans un matériau à base d'élastomère, parallèles entre eux, et croisés d'une couche de travail à la suivante, de telle sorte que l'angle moyen AM des renforts métalliques de l'armature de travail (6), défini comme la moyenne géométrique des angles respectifs formés par les renforts des première et deuxième couches de travail (61, 62) avec une direction circonférentielle (XX'), tangente à la circonférence du pneumatique, est au moins égal à 15° et au plus égal à 45°,
   - l'armature de frettage circonférentielle (7) ayant une largeur axiale LF au moins égale à 0.3 fois la largeur axiale LT de l'armature de travail (6), et comprenant au moins une couche de frettage circonférentielle (71, 72) constituée de renforts métalliques élastiques ayant un module élastique en extension au plus égal à 150 GPa, enrobés dans un matériau à base d'élastomère, parallèles entre eux et formant, avec la direction circonférentielle (XX'), un angle au plus égal à 5°,
   - les renforts métalliques élastiques de l'armature de frettage circonférentielle (7), extraits du pneumatique avec leur enrobage de matériau à base d'élastomère vulcanisé, ayant un allongement structural As au moins égal à 0.5% et une force à rupture Fr, ces deux caractéristiques étant mesurées selon la même norme ISO 6892 de 1984,

   **caractérisé en ce que** la largeur axiale LF de l'armature de frettage circonférentielle (7), l'allongement structural As et la force à rupture Fr des renforts métalliques élastiques de l'armature de frettage circonférentielle (7), et l'angle moyen AM des renforts métalliques inextensibles de l'armature de travail (6) vérifient la relation:

   $$Zn/Z0 * (T0 + (a1+a2*As)/AM + b*LF*(AM-A0)/A0 + c*AM ) < Fr/CS$$

   avec

   Zn : charge nominale ( exprimée en tonnes) appliquée sur le pneumatique,
   Z0 : charge de référence égale à 100 tonnes,
   T0 : tension de référence égale à 7000 N,
   a1 = -230000 N*°,
   a2 = -160000 N*°/%,
   b = -34000 N/m,
   A0 : angle moyen de référence des renforts métalliques de l'armature de travail (6) égal à 29°,
   c = 550 N/°,
   CS : coefficient de sécurité au moins égal à 1.

2. Pneumatique (1) pour véhicule lourd de génie civil selon la revendication 1, **dans lequel** les renforts métalliques élastiques de toute couche de frettage circonférentielle (71, 72) forment, avec la direction circonférentielle (XX'), un angle égal à 0°.

**3.** Pneumatique (1) pour véhicule lourd de type génie civil selon l'une des revendications 1 ou 2, **dans lequel** les renforts métalliques élastiques de toute couche de frettage circonférentielle (71, 72) ont un module élastique en extension au moins égal à 40 GPa, de préférence au moins égal à 75 GPa.

**4.** Pneumatique (1) pour véhicule lourd de type génie civil selon l'une quelconque des revendications 1 à 3, **dans lequel** les renforts métalliques élastiques de toute couche de frettage circonférentielle (71, 72) sont des câbles multitorons de structure 1xN comprenant une unique couche de N torons enroulés en hélice, chaque toron comprenant une couche interne de M fils internes enroulés en hélice et une couche externe de K fils externes enroulés en hélice autour de la couche interne.

**5.** Pneumatique (1) pour véhicule lourd de type génie civil selon la revendication 4, **dans lequel** l'unique couche de N torons, enroulés en hélice, comprend N=3 ou N=4 torons, de préférence N=4 torons.

**6.** Pneumatique (1) pour véhicule lourd de type génie civil selon l'une des revendications 4 ou 5, **dans lequel** la couche interne de M fils internes, enroulés en hélice, de chaque toron comprend M=3, 4 ou 5 fils internes, de préférence M=3 fils internes.

**7.** Pneumatique (1) pour véhicule lourd de type génie civil selon l'une quelconque des revendications 4 à 6, **dans lequel** la couche externe de K fils externes, enroulés en hélice autour de la couche interne de chaque toron, comprend K=7, 8, 9, 10 ou 11 fils externes, de préférence K=8 fils externes.

**8.** Pneumatique (1) pour véhicule lourd de génie civil selon l'une quelconque des revendications 1 à 7, **dans lequel** la force à rupture Fr de tout renfort métallique élastique de l'armature de frettage circonférentielle (7) est au moins égale à 8000 N.

**9.** Pneumatique (1) pour véhicule lourd de génie civil selon l'une quelconque des revendications 1 à 8, **dans lequel** l'armature de frettage circonférentielle (7) a une largeur axiale LF au plus égale à 0.9 fois la largeur axiale LT de l'armature de travail (6).

**10.** Pneumatique (1) pour véhicule lourd de génie civil selon l'une quelconque des revendications 1 à 9, **dans lequel** l'armature de frettage circonférentielle (7) est radialement positionnée entre la première couche de travail (61) et la deuxième couche de travail (62).

**11.** Pneumatique (1) pour véhicule lourd de type génie civil selon les revendications 9 et 10, **dans lequel** les deux couches de travail (61, 62) de l'armature de travail (6) entrent en contact l'une avec l'autre, au niveau de leurs extrémités axiales respectives, pour former une zone de couplage axialement intérieure à une zone de découplage au niveau de laquelle les extrémités axiales sont espacées l'une de l'autre.

**12.** Pneumatique (1) pour véhicule lourd de génie civil selon l'une quelconque des revendications 1 à 11, **dans lequel** l'armature de frettage circonférentielle (7) est constituée par deux couches de frettage circonférentielles (71, 72).

**13.** Pneumatique (1) pour véhicule lourd de type génie civil selon l'une quelconque des revendications 1 à 12, **dans lequel** l'armature de sommet (3) comprend, radialement le plus à l'extérieur, une armature de protection (5) comprenant au moins une couche de protection (51, 52) constituée de renforts métalliques élastiques ayant un module élastique en extension au plus égal à 150 GPa, enrobés dans un matériau à base d'élastomère, parallèles entre eux et formant, avec la direction circonférentielle (XX') tangente à la circonférence du pneumatique, un angle au moins égal à 10°.

**14.** Pneumatique (1) pour véhicule lourd de type génie civil selon la revendication 13, **dans lequel** l'armature de protection (5) est constituée par deux couches de protection (51, 52), dont les renforts métalliques élastiques forment, avec la direction circonférentielle (XX'), un angle au moins égal à 15°.

**15.** Pneumatique (1) pour véhicule lourd de type génie civil selon l'une des revendications 13 ou 14, **dans lequel** la couche de protection (51) la plus radialement intérieure est axialement la plus large de toutes les couches de l'armature de sommet (3).

**Patentansprüche**

1. Luftreifen (1) für ein Baustellenschwerlastfahrzeug, der dazu bestimmt ist, eine Nennlast Zn zu tragen, umfassend eine Gürtelverstärkung (3) radial innerhalb eines Laufstreifens (2) und radial außerhalb einer Karkassenverstärkung (4):

   - wobei die Gürtelverstärkung (3) eine Arbeitsverstärkung (6) und eine umfängliche Bandagierungsverstärkung (7) umfasst,
   - wobei die Arbeitsverstärkung (6) eine axiale Breite LT hat und aus einer ersten und einer zweiten Arbeitslage (61, 62) besteht, die jeweils aus undehnbaren metallischen Festigkeitsträgern mit einem Elastizitätsmodul bei Dehnung von mehr als 150 GPa bestehen, die in ein Material auf Elastomerbasis eingebettet sind, parallel zueinander sind und sich von einer Arbeitslage zur folgenden kreuzen, so dass der mittlere Winkel AM der metallischen Festigkeitsträger der Arbeitsverstärkung (6), definiert als der geometrische Mittelwert der jeweiligen Winkel, die von den Festigkeitsträgern der ersten und zweiten Arbeitslagen (61, 62) mit einer Umfangsrichtung (XX'), die den Umfang des Luftreifens tangiert, gebildet werden, mindestens 15° und höchstens 45° beträgt,
   - wobei die umfängliche Bandagierungsverstärkung (7) eine axiale Breite LF hat, die mindestens das 0,3-Fache der axialen Breite LT der Arbeitsverstärkung (6) beträgt, und mindestens eine umfängliche Bandagierungslage (71, 72) umfasst, die aus elastischen metallischen Festigkeitsträger mit einem Elastizitätsmodul bei Dehnung von höchstens 150 GPa besteht, die in ein Material auf Elastomerbasis eingebettet sind, parallel zueinander sind und mit der Umfangsrichtung (XX') einen Winkel von höchstens 5° bilden,
   - wobei die elastischen metallischen Festigkeitsträger der umfänglichen Bandagierungsverstärkung (7), wenn sie aus dem vulkanisierten Reifen mit ihrer Umhüllung aus Material auf Elastomerbasis entnommen werden, eine strukturelle Längung AS von mindestens 0,5 % und eine Bruchkraft Fr besitzen, wobei diese beiden Eigenschaften nach derselben Norm ISO 6892 von 1984 gemessen werden, **dadurch gekennzeichnet, dass** die axiale Breite LF der umfänglichen Bandagierungsverstärkung (7), die strukturelle Längung As und die Bruchkraft Fr der elastischen metallischen Festigkeitsträger der umfänglichen Bandagierungsverstärkung (7) und der mittlere Winkel AM der undehnbaren metallischen Festigkeitsträger der Arbeitsverstärkung (6) die folgende Gleichung erfüllen:

$$Zn/Z0 \ * \ (T0 \ + \ (a1+a2*As)/AM \ + \ b*LF*(AM-A0)/A0 \ + \ c*AM \ ) \ < \ Fr/CS$$

   mit

   Zn: Nennlast (ausgedrückt in Tonnen), die auf den Reifen wirkt,
   Z0: Referenzlast von 100 Tonnen,
   T0: Referenzzugkraft von 7000 N,
   a1 = -230000 N*°,
   a2 = -160000 N*°/%,
   b = -34000 N/m,
   A0: mittlerer Referenzwinkel der metallischen Festigkeitsträger der Arbeitsverstärkung (6) von 29°,
   c = 550 N/°,
   CS: Sicherheitsbeiwert von mindestens 1.

2. Luftreifen (1) für ein Baustellenschwerlastfahrzeug nach Anspruch 1, bei dem die elastischen metallischen Festigkeitsträger jeder umfänglichen Bandagierungslage (71, 72) mit der Umfangsrichtung (XX') einen Winkel von 0° bilden.

3. Luftreifen (1) für ein Baustellenschwerlastfahrzeug nach einem der Ansprüche 1 oder 2, bei dem die elastischen metallischen Festigkeitsträger jeder umfänglichen Bandagierungslage (71, 72) einen Elastizitätsmodul bei Dehnung von mindestens 40 GPa, bevorzugt von mindestens 75 GPa haben.

4. Luftreifen (1) für ein Baustellenschwerlastfahrzeug nach einem der Ansprüche 1 bis 3, bei dem die elastischen metallischen Festigkeitsträger jeder umfänglichen Bandagierungslage (71, 72) mehrlitzige Seile mit dem Aufbau I×N sind, die eine einzige Lage aus N spiralförmig gewundenen Litzen umfassen, wobei jede Litze eine innere Lage aus M spiralförmig gewundenen inneren Drähten und eine äußere Lage aus K äußeren Drähten, die spiralförmig um die innere Lage gewunden sind, umfasst.

**5.** Luftreifen (1) für ein Baustellenschwerlastfahrzeug nach Anspruch 4, bei dem die einzige Lage aus N spiralförmig gewundenen Litzen N=3 oder N=4 Litzen, bevorzugt N=4 Litzen umfasst.

**6.** Luftreifen (1) für ein Baustellenschwerlastfahrzeug nach einem der Ansprüche 4 oder 5, bei dem die innere Lage aus M spiralförmig gewundenen inneren Drähten jeder Litze M=3, 4 oder 5 innere Drähte, bevorzugt M=3 innere Drähte umfasst.

**7.** Luftreifen (1) für ein Baustellenschwerlastfahrzeug nach einem der Ansprüche 4 bis 6, bei dem die äußere Lage aus K äußeren Drähten, die spiralförmig um die innere Lage jeder Litze gewunden sind, K=7, 8, 9, 10 oder 11 äußere Drähte, bevorzugt K=8 äußere Drähte umfasst.

**8.** Luftreifen (1) für ein Baustellenschwerlastfahrzeug nach einem der Ansprüche 1 bis 7, bei dem die Bruchkraft Fr jedes elastischen metallischen Festigkeitsträgers der umfänglichen Bandagierungsverstärkung (7) mindestens 8000 N beträgt.

**9.** Luftreifen (1) für ein Baustellenschwerlastfahrzeug nach einem der Ansprüche 1 bis 8, bei dem die umfängliche Bandagierungsverstärkung (7) eine axiale Breite LF von höchstens dem 0,9-Fachen der axialen Breite LT der Arbeitsverstärkung (6) hat.

**10.** Luftreifen (1) für ein Baustellenschwerlastfahrzeug nach einem der Ansprüche 1 bis 9, bei dem die umfängliche Bandagierungsverstärkung (7) radial zwischen der ersten Arbeitslage (61) und der zweiten Arbeitslage (62) angeordnet ist.

**11.** Luftreifen (1) für ein Baustellenschwerlastfahrzeug nach den Ansprüchen 9 und 10, bei dem die beiden Arbeitslagen (61, 62) der Arbeitsverstärkung (6) an ihren jeweiligen axialen Enden in Kontakt miteinander gelangen, um einen Kopplungsbereich axial innerhalb eines Entkopplungsbereichs zu bilden, an dem die axialen Enden voneinander beabstandet sind.

**12.** Luftreifen (1) für ein Baustellenschwerlastfahrzeug nach einem der Ansprüche 1 bis 11, bei dem die umfängliche Bandagierungsverstärkung (7) aus zwei umfänglichen Bandagierungslagen (71, 72) besteht.

**13.** Luftreifen (1) für ein Baustellenschwerlastfahrzeug nach einem der Ansprüche 1 bis 12, bei dem die Gürtelverstärkung (3), radial am weitesten außen, eine Schutzverstärkung (5) umfasst, die mindestens eine Schutzlage (51, 52) umfasst, die aus elastischen metallischen Festigkeitsträgern mit einem Elastizitätsmodul bei Dehnung von höchstens 150 GPa besteht, die in ein Material auf Elastomerbasis eingebettet sind, parallel zueinander sind und mit der Umfangsrichtung (XX'), die den Umfang des Luftreifens tangiert, einen Winkel von mindestens 10° bilden.

**14.** Luftreifen (1) für ein Baustellenschwerlastfahrzeug nach Anspruch 13, bei dem die Schutzverstärkung (5) aus zwei Schutzlagen (51, 52) besteht, deren elastische metallische Festigkeitsträger mit der Umfangsrichtung (XX') einen Winkel von mindestens 15° bilden.

**15.** Luftreifen (1) für ein Baustellenschwerlastfahrzeug nach einem der Ansprüche 13 oder 14, bei dem die radial innerste Schutzlage (51) die axial breiteste aller Lagen der Gürtelverstärkung (3) ist.

**Claims**

**1.** Tyre (1) for a heavy construction plant vehicle, intended to carry a nominal load Zn, comprising a crown reinforcement (3) radially on the inside of a tread (2) and radially on the outside of a carcass reinforcement (4):

- the crown reinforcement (3) comprising a working reinforcement (6) and a circumferential hoop reinforcement (7),
- the working reinforcement (6) having an axial width LT and being formed by a first and a second working layer (61, 62) each comprising inextensible metallic reinforcers having a tensile elastic modulus of more than 150 GPa, coated with an elastomer-based material and mutually parallel, and one working layer crossing the next such that the mean angle AM of the metallic reinforcers of the working reinforcement (6), defined as the geometric mean of the respective angles formed by the reinforcers of the first and second working layers (61, 62) with a circumferential direction (XX') tangential to the circumference of the tyre, is at least equal to 15° and at most equal to 45°,

- the circumferential hoop reinforcement (7) having an axial width LF at least equal to 0.3 times the axial width LT of the working reinforcement (6) and comprising at least one circumferential hooping layer (71, 72) formed from elastic metallic reinforcers having a tensile elastic modulus of more than 150 GPa, coated with an elastomer-based material and mutually parallel, and forming with the circumferential direction (XX') an angle at most equal to 5°,

- the elastic metallic reinforcers of the circumferential hoop reinforcement (7), removed from the tyre with their coating of vulcanised elastomer-based material, having a structural elongation As at least equal to 0.5% and a force at break Fr, these two characteristics being measured in accordance with the same standard ISO 6892 of 1984,

**characterized in that** the axial width LF of the circumferential hoop reinforcement (7), the structural elongation As and the force at break Fr of the elastic metallic reinforcers of the circumferential hoop reinforcement (7), and the mean angle AM of the inextensible metallic reinforcers of the working reinforcement (6), satisfy the relationship:

$$Zn/Z0 * (T0 + (a1+a2*As)/AM + b*LF*(AM-A0)/A0 + c*AM ) < Fr/CS$$

where

Zn: the nominal load (expressed in tonnes) applied to the tyre,
Z0: reference load equal to 100 tonnes,
T0: reference tension equal to 7000 N,
a1 = -230,000 N*°,
a2 = -160,000 N*°/%,
b = -34,000 N/m,
A0: mean reference angle of metallic reinforcers of the working reinforcement (6) equal to 29°,
c = 550 N/°,
CS: safety coefficient at least equal to 1.

2. Tyre (1) for a heavy construction plant vehicle according to Claim 1, **wherein** the elastic metallic reinforcers of each circumferential hooping layer (71, 72) form an angle equal to 0° with the circumferential direction (XX').

3. Tyre (1) for a heavy construction plant vehicle according to one of Claims 1 or 2, **wherein** the elastic metallic reinforcers of each circumferential hooping layer (71, 72) have a tensile elastic modulus at least equal to 40 GPa, preferably at least equal to 75 GPa.

4. Tyre (1) for a heavy construction plant vehicle according to any of Claims 1 to 3, **wherein** the elastic metallic reinforcers of each circumferential hooping layer (71, 72) are multistrand ropes of structure 1xN comprising a single layer of N strands wound in a helix, each strand comprising an internal layer of M internal threads wound in a helix and an external layer of K external threads wound in a helix around the internal layer.

5. Tyre (1) for a heavy construction plant vehicle according to Claim 4, **wherein** the single layer of N strands, wound in a helix, comprises N=3 or N=4 strands, preferably N=4 strands.

6. Tyre (1) for a heavy construction plant vehicle according to one of Claims 4 or 5, **wherein** the internal layer of M internal threads, wound in a helix, of each strand comprises M=3, 4, or 5 internal threads, preferably M=3 internal threads.

7. Tyre (1) for a heavy construction plant vehicle according to any of Claims 4 to 6, **wherein** the external layer of K external threads, wound in a helix around the internal layer of each strand, comprises K=7, 8, 9, 10 or 11 external threads, preferably K=8 external threads.

8. Tyre (1) for a heavy construction plant vehicle according to any of Claims 1 to 7, **wherein** the force at break Fr of each elastic metallic reinforcer of the circumferential hoop reinforcement (7) is at least equal to 8000 N.

9. Tyre (1) for a heavy construction plant vehicle according to any of Claims 1 to 8, **wherein** the circumferential hoop reinforcement (7) has an axial width LF at most equal to 0.9 times the axial width LT of the working reinforcement (6).

**10.** Tyre (1) for a heavy construction plant vehicle according to any of Claims 1 to 9, **wherein** the circumferential hoop reinforcement (7) is positioned radially between the first working layer (61) and the second working layer (62).

**11.** Tyre (1) for a heavy construction plant vehicle according to Claims 9 and 10, **wherein** the two working layers (61, 62) of the working reinforcement (6) come into contact with one another at their respective axial ends, so as to form a coupling zone axially inside a decoupling zone in which the axial ends are spaced apart from one another.

**12.** Tyre (1) for a heavy construction plant vehicle according to any of Claims 1 to 11, **wherein** the circumferential hoop reinforcement (7) comprises at least two circumferential hooping layers (71, 72).

**13.** Tyre (1) for a heavy construction plant vehicle according to any of Claims 1 to 12, **wherein** the crown reinforcement (3) comprises, radially outermost, a protective reinforcement (5) comprising at least one protective layer (51, 52) formed by elastic metallic reinforcers having a tensile elastic modulus at most equal to 150 GPa, coated with an elastomer-based material, mutually parallel and forming an angle at least equal to 10° with the circumferential direction (XX') tangential to the circumference of the tyre.

**14.** Tyre (1) for a heavy construction plant vehicle according to Claim 13, **wherein** the protective reinforcement (5) is formed by two protective layers (51, 52), the elastic metallic reinforcers of which form an angle at least equal to 15° with the circumferential direction (XX').

**15.** Tyre (1) for a heavy construction plant vehicle according to one of Claims 13 or 14, **wherein** the radially innermost protective layer (51) is axially the widest of all layers of the crown reinforcement (3).

FIG. 1

FIG. 3

FIG. 4

FIG. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014048897 A1
- WO 2016139348 A1
- WO 2017093637 A1
- WO 2016139348 A